Europäisches Patentamt

European Patent Office

Office européen des brevets

(19)

(11) Publication number: **0 034 853**
**B1**

(12) **EUROPEAN PATENT SPECIFICATION**

(45) Date of publication of patent specification: **04.07.84**

(51) Int. Cl.³: **B 01 J 23/94**

(21) Application number: **81200151.9**

(22) Date of filing: **06.02.81**

(54) **Process for the removal of vanadium-containing acid from an acid-extracted deactivated demetallization catalyst.**

(30) Priority: **20.02.80 GB 8005758**

(43) Date of publication of application:
**02.09.81 Bulletin 81/35**

(45) Publication of the grant of the patent:
**04.07.84 Bulletin 84/27**

(84) Designated Contracting States:
**BE DE FR GB IT NL SE**

(56) References cited:
**FR - A - 2 288 154**
**FR - A - 2 384 854**
**GB - A - 767 122**
**GB - A - 1 438 645**
**GB - A - 1 560 599**
**US - A - 4 122 000**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Van Den Bosch, Petrus Johannes W. M.**
**Carel van Bylandtlaan 30**
**NL-2596 HR The Hague (NL)**
Inventor: **Meeboer, Bob**
**Badhuisweg 3**
**NL-1031 CM Amsterdam (NL)**

(74) Representative: **Puister, Antonius Tonnis, Mr. et al,**
**P.O. Box 302**
**NL-2501 CH The Hague (NL)**

Courier Press, Leamington Spa, England.

## Description

The invention relates to a process for the removal of vanadium-containing aqueous solution of an acid from a deactivated demetallization catalyst, from which catalyst vanadium deposited thereon has been extracted with the aid of an aqueous solution of said acid.

In catalytic processes wherein vanadium-containing hydrocarbon oils are treated at elevated temperature and pressure with hydrogen, vanadium from the feed deposits on the catalyst, as a result of which the activity of the catalyst decreases. According as more vanadium is being deposited, the activity of the catalyst further decreases and in the long run the catalyst becomes deactivated and has to be removed from the reactor.

It is of advantage to remove the vanadium deposited on the catalyst and if possible, to regenerate the catalyst; vanadium removed can be recovered. Because vanadium is a valuable metal the recovery thereof is very attractive.

It is known from FR—A—2 288 154 that vanadium can be removed from a deactivated catalyst by extraction with an aqueous solution of an acid, and in case the catalyst or the catalyst support can stand this treatment regeneration of the catalyst or the catalyst support is achieved as well.

After the extraction of the vanadium from the deactivated catalyst with the aid of an aqueous solution of an acid, the vanadium-containing solution of the said acid is to be removed from the catalyst. It has been found that a simple waterwash cannot be applied suitably for this purpose, because sticky deposits are formed which give rise to a sticking together of the catalyst particles to big aggregates.

The invention provides a method for avoiding this sticking together.

According to the invention there is provided a process for the removal of a vanadium-containing aqueous solution of an acid from a deactivated demetallization catalyst from which catalyst vanadium deposited thereon has been extracted with the aid of an aqueous solution of said acid followed by washing the catalyst until the vanadium-containing solution is substantially removed, which is characterized in that the washing may be carried out in a fixed bed when the pH of the wash liquid is below two and is carried out in a fluidized bed when the wash liquid is water or an aqueous solution of an acid having a pH equal to or greater than two.

In order to decrease the probability that locally the value of the pH reaches a value higher than two, it is preferred to carry out the washing procedure in a fluidized bed when the washing liquid has a pH greater than one.

Examples of vanadium-containing hydrocarbon oils are residual oils, which are e.g. residues obtained from the distillation of crude oil at atmospheric or reduced pressure. If desired, some components may be removed from the said residues in order to yield a residual oil; they may e.g. be deasphalted or dewaxed. Metals from such oils are to be removed in order to make the oil suitable for further processes in which the catalysts to be used are deactivated by metals, such as hydrodesulphurization or hydrocracking. In most cases these oils contain appreciable amounts of vanadium and smaller amounts of nickel.

After the catalyst used for the removal of metals from a vanadium-containing hydrocarbon oil (also called hydrodemetallization) has been deactivated, the hydrocarbon oil is to be removed from the catalyst before extraction with an acid can be carried out. For that reason the deactivated catalyst is very suitably treated with a non-oxidizing gas such as a fuel gas, which for the greater part consists of nitrogen and light hydrocarbons, resulting in a deactivated catalyst free of oil.

In many cases the deactivated catalyst may contain appreciable amounts of sulphur compounds which have been formed from sulphur compounds present in the feed. It is of advantage to remove these sulphur compounds at least partly from the deactivated catalyst before the extraction with an aqueous solution of an acid is started. Sulphur compounds are very conveniently removed by treating the deactivated catalyst with steam at elevated temperatures, e.g. between 250 and 550°C, in particular between 325 and 425°C, and at elevated pressures e.g. between 1.5 and 10 bars, in particular between 2 and 7 bars.

After this treatment the catalyst is to be cooled before the extraction with an aqueous solution of an acid, which extraction is very conveniently carried out at a temperature between 50°C and the boiling point of the aqueous solution, in particular between 70°C and 100°C. The acid very suitably is a mineral acid, such as hydrochloric acid, and in particular sulphuric acid. Extraction with a 1—5 N aqueous sulphuric acid is in particular suitable.

Owing to the extraction with an aqueous solution of an acid at least part of the vanadium present as such or in the form of an oxide or a salt is dissolved in the aqueous solution, which vanadium-containing aqueous solution of an acid has to be removed from the catalyst after the extraction.

According to the invention this can be achieved by washing with water or with an aqueous solution of an acid, which washing procedure is to be carried out in a fluidized bed in case the washing liquid has a pH greater than two.

The washing procedure is very suitably carried out in a separate vessel. Very conveniently the washing is carried out with water in a fluidized bed. The term fluidized bed stands for a situation in which the stream of washing liquid is led from below into the washing vessel at such a speed that the separate catalyst particles are kept suspended in the liquid.

It is also possible to use an aqueous solution of an acid to remove the vanadium-containing acid from the deactivated catalyst. The washing with such an aqueous solution may be carried out in a fixed bed in case the pH of the solution is below two, otherwise the washing must be carried out in a fluidized bed. If desired washing with an aqueous solution of an acid with a pH below two may of course also be carried out in a fluidized bed, although in most cases this may not be attractive for economical reasons.

In case an aqueous solution of an acid is used for the washing procedure, it is preferred that the said acid is the same acid as used in the extraction. In most cases it will be attractive to use the acid in the washing step in a lower concentration than in the extraction step. In case sulphuric acid is used, an 0—2N sulphuric acid aqueous solution is very suitable as washing liquid.

The washing is preferably carried out at about the same temperature as the extraction, e.g. from 20 to 110°C, in particular from 50 to 100°C.

After the vanadium-containing aqueous solution has been removed from the catalyst, the latter may subsequently be washed with water. Such a waterwash is in particular of advantage in case the washing liquid consisted of an aqueous solution of an acid. This waterwash may be carried out in a fixed catalyst bed.

After the waterwash the catalyst is very conveniently dried with the aid of a gas at a temperature above 100°C, e.g. at a temperature of 120 to 200°C. In order to avoid undue oxidation of coke, which in many cases will be present on the deactivated catalyst, the drying is preferably carried out with a non-oxidizing gas such as nitrogen or a mixture of nitrogen and carbon dioxide.

In many cases coke will have been deposited on the catalyst during the hydrodemetallization. Although this coke may be burnt off before the extraction with an aqueous solution of an acid, it is preferred to remove at least part of the coke after the removal of vanadium from the catalyst. Coke removal is very suitably carried out by contacting the catalyst with an oxygen containing gas, e.g. a mixture of nitrogen, carbon dioxide and from 0.5—5% oxygen at elevated temperature e.g. from 300 to 600°C.

The material thus obtained may be suitable for use as demetallization catalyst for hydrocarbon oils or as a carrier for such a catalyst. It may be of advantage to deposit metals with hydrogenating activity or compounds thereof on the material obtained which have originally been present in the catalyst but which have been removed during the regeneration procedure, such as one or more of the metals or compounds of cobalt, nickel, molybdenum, tungsten and vanadium. The metals and compounds thereof can be deposited on the said material, which serves as a carrier, by well-known techniques, e.g. by impregnation with one or more solutions of compounds (e.g. salts) of one or more of the relevant metals, followed by drying and calcining.

In case a catalyst is to be used in the hydrodemetallization which contains vanadium and nickel as the metals with hydrogenating activity, the extraction with an aqueous solution of an acid may be carried out to such an extent that the desired amounts of these metals remain on the catalyst. In that case no further metal deposition is needed. The same applies to the case in which silica without any metals deposited thereon is to be used as demetallization catalyst.

In most cases part of the catalyst particles will have disintegrated during the regeneration procedure. It is of advantage to remove the smaller particles, in particular the fines, by classification, e.g. by sieving, before the catalyst is recycled to the hydrodemetallization reactor.

As mentioned above catalysts or the carriers thereof which are to be used again for the hydrodemetallization of metal containing hydrocarbon oils must be able to stand the extraction with an aqueous solution of an acid.

For that reason catalysts which consist of silica or consist of silica as a carrier on which one or more metals with hydrogenating activity have been deposited, are preferred.

As a matter of course the loading with vanadium of a catalyst during the demetallization of a hydrocarbon oil can be varied within wide limits. The catalyst regeneration procedure is conveniently adapted to the amounts of catalyst to be regenerated and to the amount of vanadium deposited on that catalyst.

Very suitable catalysts have been described in British patent specification 1,438,645. These catalysts contain one or more metals with hydrogenating activity on a silica carrier, and meet the following requirements:

(1) $10.0 - 0.15\ v \geqslant p/d \geqslant 3.5 - 0.02\ v$, in which p is the specific average pore diameter in nm, d is the specific average particle diameter in mm and v is the percentage of the total pore volume that consists of pores with a diameter larger than 100 nm,
(2) v is smaller than 50,
(3) the nitrogen pore volume is larger than 0.60 ml/g,
(4) the surface area is larger than 150 $m^2$/g, and
(5) p is larger than 5.

The values to be inserted for p, d, v, the total pore volume, the nitrogen pore volume and the surface area are to be determined as described in the said British patent specification 1,438,645.

Very suitable hydrodemetallization catalysts have also been described in British patent specification 1,458,755. They contain 0.1—15 p.b.w. of the metal combination nickel-vanadium per 100 p.b.w. of silica as a carrier, and they have a loss on ignition (determined under standard conditions) of less than 0.5% w.

Catalysts described in British patent specification 1,522,524 are also very suitable. They meet the requirements mentioned above and have been obtained according to the nodulizing technique; the pore volume present in pores with a diameter greater than 50 nm is at least 0.2 ml/g.

In case the hydrocarbon oil to be demetallized has a high metal content, it is also possible to use as a catalyst silica, on which no metals with hydrogenating activity have been deposited, as described in the Netherlands patent application 7607552.

Example I (Comparative)

A catalyst comprising 0.5 pbw nickel and 2.0 pbw vanadium per 100 pbw silica carrier was prepared by impregnating a silica carrier with an aqueous solution of nickel nitrate and vanadyl oxalate followed by drying and calcining the composition. The catalyst was applied in the sulphidic form for the hydrodemetallization of a hydrocarbon oil having a total vanadium and nickel content of 62 ppmw (parts per million by weight), a $C_5$-asphaltene content of 6.4% w and a sulphur content of 3.9% w, which oil had been obtained as a residue in the atmospheric distillation of a Middle East crude oil. The hydrodemetallization was carried out by passing the oil together with hydrogen downwardly through a cylindrical vertically arranged fixed catalyst bed at a temperature of 420°C, a total pressure of 150 bar, a space velocity of 5 kg.$l^{-1}$.$h^{-1}$ and a gas velocity (measured at the reactor outlet) of 250 $Nl H_2$.$kg^{-1}$. After the catalyst had become deactivated in this process, it was removed stored in heavy gasoil and analysed. The oily deactivated catalyst (catalyst A) comprised 9.7 pbw carbon, 20.6 pbw sulphur, 4.1 pbw nickel and 24.3 pbw vanadium per 100 pbw silica. 500 g of catalyst A was deoiled during 14 hours at 350°C, 3.3 bar and a gasflow of 0.5 Nl of nitrogen/g catalyst/hour. Subsequently, the catalyst was treated with steam during 7 hours at 400°C, 2.8 bars and a flow of 1.25 Nl of steam/g catalyst/hour. After cooling under nitrogen, the catalyst was extracted during 7 hours at 90°C with 0.6 l of 2 N sulphuric acid/kg catalyst/hour. Next, the catalyst was washed in a fixed bed during 7 hours at 70°C with 0.6 l of demineralized water/kg catalyst/hour. After this treatment it was observed that removal of the catalyst from the extraction vessel proved to be very difficult, the reason being that the catalyst mass was solidly agglomerated. Analysis showed that by this treatment 79% of the vanadium and 30% of the nickel had been removed from the catalyst.

Example II

Catalyst A was treated in substantially the same way as described in example I, however with the difference that after the extraction with 2N sulphuric acid, the catalyst was washed for 7 hours at 70°C with 0.6 l of demineralized water/kg catalyst/hour, whilst keeping the catalyst in a fluidized state by circulating 50 l of demineralized water/kg catalyst/hour. After this treatment, the entire catalyst mass proved to be free flowing.

Analysis showed that by this treatment 90% of the vanadium and 40% of the nickel had been removed from the catalyst.

Example III

Catalyst A was treated in substantially the same way as described in example I, however with the difference that after the extraction with 2 N sulphuric acid, the catalyst was washed in fixed bed for 7 hours at 70°C with 0.6 l of 0.2 N sulphuric acid/kg catalyst/hour and thereafter was washed for 7 hours at 70°C with 0.6 l of demineralized water/kg catalyst/hour. After this treatment, the entire catalyst mass proved to be free flowing.

Analysis showed that by this treatment 92% of the vanadium and 47% of the nickel had been removed from the catalyst.

**Claims**

1. A process for the removal of a vanadium-containing aqueous solution of an acid from a deactivated demetallization catalyst, from which catalyst vanadium deposited thereon has been extracted with the aid of an aqueous solution of said acid followed by washing the catalyst until the vanadium-containing solution is substantially removed, characterized in that the washing may be carried out in a fixed bed when the pH of the wash liquid is below two and is carried out in a fluidized bed when the wash liquid is water or an aqueous solution of an acid having a pH equal to or greater than two.

2. A process according to claim 1, in which the washing procedure is carried out in a fluidized bed when the washing liquid has a pH greater than one.

3. A process according to claim 1 or 2, in which the demetallization catalyst consists of silica or comprises silica as a carrier.

4. A process according to any one of the preceding claims, in which the demetallization catalyst has been deactivated in a process for hydrodemetallization of a residual oil.

5. A process according to any one of the preceding claims, in which the vanadium-containing aqueous solution of an acid has been obtained by extracting vanadium from the deactivated demetallization catalyst with the aid of aqueous sulphuric acid.

6. A process according to claim 5, in which 1—5 N aqueous sulphuric acid is used.

7. A process according to any one of the preceding claims, in which the temperature at which the catalyst is washed with water or an aqueous solution of an acid is from 20 to 110°C, in particular from 50 to 100°C.

8. A process according to any one of the preceding claims, in which the catalyst is washed with an aqueous solution of the same acid as used in the extraction.

9. A process according to any one of claims 5 to 8, in which the catalyst is washed with 0—2 N sulphuric acid.

10. A process according to any one of the preceding claims, in which, when the washing procedure has been carried out with an aqueous solution of an acid, this acid is removed from the catalyst by washing with water.

11. A process according to any one of the preceding claims, in which the catalyst obtained after removal of the vanadium-containing acid is dried and subsequently heated in the presence of an oxygen-containing gas at a temperature from 300 to 600°C.

12. A process according to any one of the preceding claims, in which from the catalyst obtained after removal of the vanadium-containing acid, if desired after deposition thereon of metals with hydrogenating activity or compounds thereof, the smaller particles are removed by classification.

**Patentansprüche**

1. Ein Verfahren zur Entfernung einer Vanadium enthaltenden wäßrigen Lösung einer Säure von einem desaktivierten Entmetallisierungskatalysator, aus welchem Katalysator darauf abgelagertes Vanadium mit Hilfe einer wäßrigen Lösung der genannten Säure extrahiert wurde, worauf der Katalysator solange gewaschen wird, bis die Vanadium enthaltende Lösung im wesentlichen entfernt ist, dadurch gekennzeichnet, daß das Waschen in einem Festbett erfolgen kann, wenn der pH-Wert der Waschflüssigkeit unter 2 liegt, und in einem Fließbett durchgeführt wird, wenn die Waschflüssigkeit Wasser oder eine wäßrige Lösung einer Säure ist, deren pH-Wert 2 oder größer ist.

2. Ein Verfahren gemäß Anspruch 1, in welchem der Waschvorgang in einem Fließbett stattfindet, wenn der pH-Wert der Waschflüssigkeit größer als 1 ist.

3. Ein Verfahren gemäß Anspruch 1 oder 2, in welchem der Entmetallisierungskatalysator aus Siliciumdioxid besteht oder Siliciumdioxid als Trägermaterial enthält.

4. Ein Verfahren gemäß irgendeinem der vorstehenden Ansprüche, in welchem der Entmetallisierungskatalysator desaktiviert worden ist in einem Verfahren zur Hydroentmetallisierung von einem Rückstandsöl.

5. Ein Verfahren gemäß irgendeinem der vorstehenden Ansprüche, in welchem die Vanadium enthaltende wäßrige Lösung einer Säure erhalten wurde durch Extraktion des Vanadium aus dem desaktivierten Entmetallisierungskatalysator mit Hilfe wäßriger Schwefelsäure.

6. Ein Verfahren gemäß Anspruch 5, in welchem 1—5 N wäßrige Schwefelsäure verwendet wird.

7. Ein Verfahren gemäß irgendeinem der vorstehenden Ansprüche, in welchem die Temperatur, bei welcher der Katalysator mit Wasser oder einer wäßrigen Lösung einer Säure gewaschen wird, in Bereich von 20 bis 110°C, vorzugsweise im Bereich von 50 bis 100°C liegt.

8. Ein Verfahren gemäß irgendeinem der vorstehenden Ansprüche, in welchem der Katalysator mit einer wäßrigen Lösung derselben Säure gewaschen wird, wie sie bei der Extraktion verwendet wird.

9. Ein Verfahren gemäß irgendeinem der Ansprüche 5 bis 8, in welchem der Katalysator mit einer 0—2 N Schwefelsäure gewaschen wird.

10. Ein Verfahren gemäß irgendeinem der vorstehenden Ansprüche, in welchem, falls der Waschvorgang mit einer wäßrigen Lösung einer Säure durchgeführt worden ist, diese Säure durch Waschen mit Wasser vom Katalysator entfernt wird.

11. Ein Verfahren gemäß irgendeinem der vorstehenden Ansprüche, in welchem der nach Entfernen der Vanadium enthaltenden Säure erhaltene Katalysator getrocknet und anschließend in Gegenwart eines sauerstoffhaltigen Gases auf eine Temperatur im Bereich von 300 bis 600°C erhitzt wird.

12. Ein Verfahren gemäß irgendeinem der vorstehenden Ansprüche, in welchem von dem nach Entfernung der Vanadium enthaltenden Säure erhaltenen Katalysator, gewünschtenfalls nach Ablagerung von Metallen mit Hydrieraktivität oder Verbindungen davon, die kleineren Teilchen durch Klassieren entfernt werden.

**Revendications**

1. Un procédé pour éliminer une solution aqueuse d'un acide contenant du vanadium d'un catalyseur de démétallisation désactivé, catalyseur duquel le vanadium déposé a été extrait à l'aide d'une solution aqueuse dudit acide, cela étant suivi d'un lavage du catalyseur jusqu'à ce que la solution contenant du vanadium soit sensiblement éliminée, caractérisé en ce que le lavage peut être effectué dans un lit fixe quand le pH du liquide de lavage est au-dessous de deux et est effectué dans un lit fluidisé quand le liquide de lavage est de l'eau ou une solution aqueuse d'un acide ayant un pH égal ou supérieur à deux.

2. Un procédé selon la revendication 1, dans lequel l'opération de lavage est effectuée dans un lit fluidisé quand le liquide de lavage a un pH supérieur à un.

3. Un procédé selon la revendication 1 ou 2, dans lequel le catalyseur de démétallisation consiste en silice ou comprend de la silice comme support.

4. Un procédé selon l'une quelconque des revendications précédentes, dans lequel le catalyseur de démétallisation a été désactivé dans un procédé pour l'hydrodémétallisation d'une huile résiduelle.

5. Un procédé selon l'une quelconque des revendications précédentes, dans lequel la solution aqueuse d'un acide contenant du vanadium a été obtenue en extrayant le vanadium du catalyseur de démétallisation désactivé à l'aide d'acide sulfurique aqueux.

6. Un procédé selon la revendication 5, dans lequel on utilise de l'acide sulfurique aqueux 1—5 N.

7. Un procédé selon l'une quelconque des revendications précédentes, dans lequel la température à laquelle le catalyseur est lavé à l'eau ou avec une solution aqueuse d'un acide est comprise entre 20 et 110°C, en particulier entre 50 et 100°C.

8. Un procédé selon l'une quelconque des revendications précédentes, dans lequel le catalyseur est lavé avec une solution aqueuse du même acide qu'utilisé dans l'extraction.

9. Un procédé selon l'une quelconque des revendications 5 à 8, dans lequel le catalyseur est lavé avec de l'acide sulfurique 0—2 N.

10. Un procédé selon l'une quelconque des revendications précédentes, dans lequel, quand l'opération de lavage a été effectuée avec une solution aqueuse d'un acide, cet acide est éliminé du catalyseur par lavage à l'eau.

11. Un procédé selon l'une quelconque des revendications précédentes, dans lequel le catalyseur obtenu après élimination de l'acide contenant du vanadium est séché et ensuite chauffé en présence d'un gaz contenant de l'oxygène à une température comprise entre 300 et 600°C.

12. Un procédé selon l'une quelconque des revendications précédentes, dans lequel, à partir du catalyseur obtenu après élimination de l'acide contenant du vanadium, éventuellement après dépôt sur lui de métaux ayant une activité d'hydrogénation ou de composés de ces métaux, les particules assez petites sont éliminées par classement.